# EUROPÄISCHE PATENTSCHRIFT

(11) **EP 2 059 932 B1**
(45) Veröffentlichungstag und Bekanntmachung des Hinweises auf die Patenterteilung: **16.11.2016**
(21) Anmeldenummer: 07801306.7
(22) Anmeldetag: 04.09.2007
(51) Int. Cl.: H01B 3/30, C08K 3/18, C08K 3/30, H01K 3/30

(54) **ZUSAMMENSETZUNG ZUR BESCHICHTUNG ELEKTRISCHER LEITER UND VERFAHREN ZUR HERSTELLUNG EINER SOLCHEN ZUSAMMENSETZUNG**
COMPOSITION FOR COATING ELECTRIC CONDUCTORS, AND METHOD FOR THE PRODUCTION OF SUCH A COMPOSITION
COMPOSITION DESTINÉE AU REVÊTEMENT DE CONDUCTEURS ÉLECTRIQUES, ET PROCÉDÉ DE PRODUCTION D'UNE TELLE COMPOSITION

(30) Priorität: 04.09.2006 DE 102006041738
(43) Veröffentlichungstag der Anmeldung: 20.05.2009
(73) Patentinhaber: Leibniz-Institut für Neue Materialien gemeinnützige GmbH, 66123 Saarbrücken (DE)
(72) Erfinder: ALBAYRAK, Sener, 66123 Saarbrücken (DE); BECKER-WILLINGER, Carsten, 66130 Saarbrücken (DE); VEITH, Michael, 66386 St. Ingbert (DE); AKTAS, Oral, Cenk, 66123 Saarbrücken (DE)
(74) Vertreter: Vièl, Christof
(86) Internationale Anmeldenummer: PCT/DE2007/001569
(87) Internationale Veröffentlichungsnummer: WO 2008/028471

(56) Entgegenhaltungen:
- EP-A- 1 166 283
- WO-A-2004/090053
- US-A- 4 521 549

## Beschreibung

Die Erfindung betrifft eine Zusammensetzung zur Beschichtung elektrischer Leiter und ein Verfahren zur Herstellung einer solchen Zusammensetzung.

Metallische Drähte aus z.B. Kupfer oder Aluminium finden als Wicklungen breite Anwendung, u.a. in Elektromotoren, Drehstrommotoren und Transformatoren. Die Drähte sind an ihrer Oberfläche mit einer elektrischen Isolationsbeschichtung versehen, um die einzelnen Drahtwindungen gegeneinander zu isolieren und einen Kurzschluß zu verhindern, welcher die Verwendung als Spule unmöglich machen würde. Drehzahlvariable Motoren beispielsweise werden vom unteren bis in den mittleren Leistungsbereich überwiegend mit Pulsumrichtern realisiert. Die daraus resultierende elektrische Belastung, welche auf die Isolation einwirkt, ist unter diesen Bedingungen sogar noch wesentlich größer als im einfachen Netzbetrieb. Bei Schaltvorgängen können dabei Spannungsspitzen auftreten, die das Dreifache der anliegenden Klemmenspannung erreichen können. Dabei treten in der Isolation kurzzeitig Temperaturen von bis zu 350 °C auf, die die organisch basierte Polymerstruktur schädigen können. Erodiert das Isolationsmaterial infolge thermischer Belastung durch ständige Teilentladungen an einer Stelle vollständig, so führt der an dieser Stelle unmittelbar auftretende Durchschlag zum kompletten Ausfall der Windungsisolierung.

Um Hochspannungsbelastungen bzw. impulsförmige Spannungsbelastungen durch z.B. pulsierende Wechselspannungen unbeschadet überstehen zu können, müssen die Isolationsschichten der Drahtwicklungen daher den hohen Anforderungen an eine elektrische und thermische Dauerbeständigkeit genügen. Daneben sollen die Isolationsschichten eine hohe Kratz- und Haftfestigkeit sowie einen hohen Widerstand gegen schabende Beanspruchung und hohe Abriebfestigkeit aufweisen und müssen weiterhin auch ausreichend flexibel sein, d.h. die Isolationsbeschichtung darf beim Biegen und entsprechender Dehnung der Drähte im Rahmen der Weiterverarbeitung nicht reißen.

In der WO 96/42089 A1 wurde bereits beschrieben, daß über die Verwendung von anorganischen oxidischen Partikeln im (Sub-)Mikrometerbereich in polymeren Lackbindemitteln im speziellen Anwendungsfall der Pulsumrichtersteuerung von Elektromotoren eine Erhöhung der Teilentladungsbeständigkeit und damit eine Verbesserung der Systemzuverlässigkeit erzielt werden kann. Der grundsätzliche Nachteil der dort beschriebenen Systemzusammensetzungen besteht in der Tatsache, daß die partikuläre oxidische Phase nicht an die Matrix angebunden ist. Die nicht angebundenen Teilchen wirken festigkeitsvermindernd und erleichtern die Rißbildung in der Isolationsschicht während der verarbeitungsbedingten Dehnung im Verlaufe des Wickelvorganges. Die vorzeitige Rißbildung führt zu Fehlstellen, die sich in einer deutlichen Reduktion der Teilentladungsbeständigkeit äußern. Aus diesem Grund wird dort ein Mehrschichtaufbau beschrieben, wobei die oxidisch gefüllte Schicht immer durch eine ungefüllte Schicht abgedeckt wird, um die Rißeinleitungstendenz ausgehend von der Isolationsschicht-Oberseite möglichst gering zu halten. Der notwendige Mehrschichtaufbau aus verschiedenen Materialien erfordert einen erhöhten produktionstechnischen Aufwand und ist daher von Nachteil.

Die EP 1 166 283 B1 offenbart demgegenüber eine kompositäre Beschichtungszusammensetzung für metallische Leiter, die im Rahmen eines Einschicht- oder Mehrfachschichtauftrages Verwendung findet und den vorgenannten Nachteil der verringerten Teilentladungsbeständigkeit durch verringerte Dehnbarkeit nicht aufweist. Kern der Beschreibung ist eine Beschichtungszusammensetzung, welche 1 - 60 Gew.-% oxidische Partikel, 0 - 90 Gew.-% eines oder mehrerer üblicher Bindemittel und 0 - 95 Gew.-% eines oder mehrerer üblicher Additive, Lösemittel, Pigmente und/oder Füllstoffe enthält. Die oxidischen Partikel sind auf der Basis eines Element-Sauerstoff-Netzwerkes mit Elementen aus der Reihe Silizium, Zink, Aluminium, Zinn, Bor, Germanium, Gallium, Blei, der Übergangsmetalle sowie der Lanthaniden und Actiniden, insbesondere der Reihe Silizium, Titan, Zink, Yttrium, Cer, Vanadin, Hafnium, Zirkonium, Nickel und/oder Tantal aufgebaut und an die Bindemittelmatrix angebunden. Durch diese Anbindung wird erreicht, daß die Dehnbarkeit der erzeugten Isolationsschichten gegenüber der ungefüllten Polymermatrix zumindest nur geringfügig verschlechtert wird. Es resultieren Beschichtungen mit guter Oberflächenqualität und ausreichender Flexibilität auch im Einschichtauftrag. Dabei führen die Partikel mit einem mittleren Durchmesser von 1 - 300 nm zu einer Verbesserung der Teilentladungsbeständigkeit bzw. elektrischen Lebensdauer der Isolierlackschicht auch unter Dehnung. Eine überproportionale Erhöhung der Teilentladungsbeständigkeit wird jedoch durch die partikuläre Modifizierung nicht erreicht, wodurch wiederum relativ hohe Gehalte an Partikeln im Bereich von 30 Gew.-% eingesetzt werden müssen, um die auf hohem Niveau gewünschten elektrischen Isolationseigenschaften aucht tatsächlich zu erreichen.

Die der vorliegenden Erfindung zugrundeliegende Aufgabe besteht somit darin, eine Zusammensetzung zur Beschichtung elektrischer Leiter zur Verfügung zu stellen, deren Teilentladungsbeständigkeit gegenüber den Lösungen des Standes der Technik unter Erhalt einer hohen Dehnbarkeit der erzeugten Isolationsschicht signifikant erhöht ist. Darüber hinaus sollen gleichzeitig die thermischen und die mechanischen Eigenschaften der erzeugten Lackschichten verbessert werden.

Diese Aufgabe wird durch eine Zusammensetzung zur Beschichtung elektrischer Leiter bestehend aus
➢ 1 - 50 Gew.-% Mikroteilchen mit einer gezielt eingestellten elektronischen Defektstruktur im Kristallgitter, welche eine erhöhte Polarisierbarkeit der Valenzelektronen bewirkt und
➢ einer organischen und/oder organisch-anorganischen polymeren Matrix, wobei die Matrix aus Polyurethan besteht,
gelöst, wobei die Mikroteilchen mit der gezielt eingestellten elektronischen Defektstruktur aus ZrO₂ aufgebaut sind, in der Weise, daß das Grundkristallgitter durch Dotierung mit Y₂O₃ mit Leerstellen im Kristallgitter ausgestattet ist, welche über Defektchemie (Defektstruktur) eine erhöhte elektronische Polarisierbarkeit der Mikroteilchen bewirken, wobei 0,5 bis 15 mol.-% Dotierungselemente eingesetzt sind.

Die mit der erfindungsgemäßen Beschichtungszusammensetzung erreichten Isolierschichten gewährleisten gegenüber den bisher bekannten Zusammensetzungen eine signifikant überproportional erhöhte Teilentladungsbeständigkeit, wodurch eine Dauerbelastung unter Einwirkung von hohen Spannungen und auch gleichzeitig höheren Temperaturen, insbesondere bei impulsförmigen Spannungen möglich wird. Sie zeigen eine deutlich erhöhte elektrische Belastbarkeit und eine signifikant längere Lebensdauer im Vergleich zu Komposit-Zusammensetzungen mit Partikeln ohne Defektchemie. Zudem weisen hiermit erstellte Beschichtungen eine geringe Oberflächenenergie auf.

Weiterhin zeigen die mit den erfindungsgemäßen Beschichtungszusammensetzungen erzielten Isolierschichten neben erhöhter Teilentladungsbeständigkeit auch eine exzellente Haftung und hohe Abriebbeständigkeit sowie hohe Härte und Flexibilität mit einer guten Oberflächenqualität.

Darüber hinaus wurde festgestellt, daß die erfindungsgemäße Zusammensetzung bei hohen Temperaturen (z.B. 300 °C) eingesetzt werden kann und dort die beschriebene Funktionsweise aufrechterhält.

Zusammenfassend wird eine Zusammensetzung aus einer polymeren Matrix sowie überspannungsminimierenden Metalloxid-Mikroteilchen zur Verwendung als Isolation für elektrische Leiter, wie z.B. Metall-Drähte, mit deutlich überproportional erhöhter elektrischer Lebensdauer (deutlich verbesserte Teilentladungsbeständigkeit) bei gleichzeitig erhöhter thermischer Stabilität und verbesserten mechanischen Eigenschaften (Abriebbeständigkeit, Festigkeit, Flexibilität) geschaffen.

Bei einer bevorzugten Ausbildung der Erfindung ist vorgesehen, daß die organische und/oder organisch-anorganische Matrix ein oder mehrere polymerisierbare und/oder hybride Bindemittel umfaßt.

Eine Weiterbildung der Erfindung besteht darin, daß die Zusammensetzung einen oder mehrere der Stoffe aus der Gruppe bestehend aus Additiven, Polymerisationsinitiatoren, Lösungsmitteln, Pigmenten und/oder Füllstoffen enthält.

Weiterhin ist vorgesehen, daß 1 bis 10 mol.-%, besonders bevorzugt 2 bis 8 mol.-% Dotierungselemente eingesetzt sind.

Es liegt im Rahmen der Erfindung, daß der mittlere Teilchendurchmesser der Mikroteilchen mit elektronischer Defektstruktur 1 bis 1.000 nm beträgt.

Ebenfalls ist zur Erfindung gehörig, daß die Mikroteilchen den polymerbasierten und/oder hybriden Bindemittel angepaßte reaktive Oberflächen-Gruppen enthalten.

In diesem Zusammenhang ist es zweckmäßig, daß die reaktiven Oberflächen-Gruppen aus der Gruppe bestehend aus Metallsäureestern, Cyanatogruppen, Urethangruppen, Epoxidgruppen, Epoxy, Carbonsäureanhydrid, C=C-Doppelbindungssystemen, Hydroxygruppen, sauerstoffgebundene Alkohole, Ester, Ether, Chelatbildner, Carboxylgruppen, Aminogruppen, Ammonium und/oder reaktiven Harzkomponenten ausgewählt sind, wobei die polymerbasierten Bindemittel Acrylat-, Phenol-, Melamin-, Polyester-Polyesterimid-, Polysulfid-, Epoxid- oder Polyamidgruppen, Polyvinylformalharze, Aromate, Aliphate, Ester, Ether, Alkoholate, Fette oder Chelatbildner enthalten.

Es ist zur Erfindung gehörig, daß die Zusammensetzung transparent ist.

Da es möglich ist, eine erfindungsgemäße Zusammensetzung transparent auszubilden, ist es auch möglich, diese unter anderem im Bereich der Optik, z.B. der Displaytechnologie, einzusetzen.

Ebenfalls ist im Rahmen der Erfindung vorgesehen, daß die Zusammensetzung eine Fluorverbindung enthält.

Eine Ausbildung der Erfindung besteht darin, daß die Zusammensetzung organisch modifizierte anorganische Kondensate enthält.

Weiterhin ist vorgesehen, daß die Zusammensetzung ein fluoriertes Silan, dessen Vorkondensat oder Kondensat enthält.

Im Rahmen der Erfindung liegt auch ein Verfahren zum Herstellen einer Beschichtung für elektrische Leiter, wobei
➢ 1 - 50 Gew.-% Mikroteilchen mit einer gezielt eingestellten elektronischen Defektstruktur im Kristallgitter, welche eine erhöhte Polarisierbarkeit der Valenzelektronen und
➢ eine organische und/oder organisch-anorganische polymere Matrix, wobei die Matrix aus Polyurethan besteht,
dispergiert werden, wobei die Mikroteilchen mit der gezielt eingestellten elektronischen Defektstruktur aus ZrO₂
aufgebaut sind, in der Weise, daß das Grundkristallgitter durch Dotierung mit Y₂O₃ mit Leerstellen im Kristallgitter ausgestattet wird, welche über Defektchemie (Defektstruktur) eine erhöhte elektronische Polarisierbarkeit der Mikroteilchen bewirken, wobei 0,5 bis 15 mol.-% Dotierungselemente eingesetzt werden.

In diesem Zusammenhang liegt es im Rahmen der Erfindung, daß die organische und/oder organisch-anorganische Matrix ein oder mehrere polymerisierbare und/oder hybride Bindemittel umfaßt.

Erfindungsgemäß ist hierbei vorgesehen, daß einer oder mehrere der Stoffe aus der Gruppe bestehend aus Additiven, Polymerisationsinitiatoren, Lösungsmitteln, Pigmenten und/oder Füllstoffen zugegeben werden.

Es ist zur Erfindung gehörig, daß 1 bis 10 mol.-%, besonders bevorzugt 2 bis 8 mol.-% Dotierungselemente eingesetzt werden.

Weiterhin ist es zweckmäßig, daß der mittlere Teilchendurchmesser der Mikroteilchen mit elektronischer Defektstruktur 1 bis 1.000 nm beträgt.

Es kann auch sinnvoll sein, daß die Einstellung der elektronischen Defektstruktur der Mikroteilchen durch Ionenstrahl- und/oder Elektronenstrahl-Behandlung erfolgt.

Ebenso ist im Rahmen der Erfindung vorgesehen, daß die Mikroteilchen den polymerbasierten und/oder hybriden Bindemittel angepaßte reaktive Oberflächen-Gruppen enthalten.

In diesem Zusammenhang ist vorgesehen, daß die reaktiven Oberflächen-Gruppen aus der Gruppe bestehend aus Metallsäureestern, Cyanatogruppen, Urethangruppen, Epoxidgruppen, Epoxy, Carbonsäureanhydrid, C=C-Doppelbindungssystemen, Hydroxygruppen, sauerstoffgebundene Alkohole, Ester, Ether, Chelatbildner, Carboxylgruppen, Aminogruppen, Ammonium und/oder reaktiven Harzkomponenten ausgewählt sind, wobei die polymerbasierten Bindemittel Acrylat-, Phenol-, Melamin-, Polyester-Polyesterimid-, Polysulfid-, Epoxid- oder Polyamidgruppen, Polyvinylformalharze, Aromate, Aliphate, Ester, Ether, Alkoholate, Fette oder Chelatbildner enthalten.

Durch die Auswahl polymerisierbarer bzw. nicht polymerisierbarer Oberflächen-Gruppen kann auf die mechanischen Eigenschaften (z.B. das Elastizitätsmodul) der Beschichtung Einfluß genommen werden.

Die zugrunde liegenden Mechanismen der vorliegenden Erfindung zur erhöhten Polarisierbarkeit über elektronische Defektstruktur im Kristallgitter der Mikroteilchen werden anhand einer Zusammensetzung unter Verwendung von Yttrium-dotiertem Zirkondioxid wie folgt vermutet, wobei diesbezüglich keine Festlegung erfolgen soll: Bei der Dotierung von Zirkondioxid mit Yttrium werden statistisch Gitterplätze des vierwertigen Zirkoniums durch dreiwertiges Yttrium besetzt. Dadurch entstehen Sauerstoffleerstellen im Kristallgitter im Vergleich zu undotiertem Zirkoniumdioxid, die als Defektstruktur bezeichnet werden. Durch die gezielt herbeigeführte Defektstruktur wird letztlich die Polarisierbarkeit der Valenzelektronen stark erhöht. Die erhöhte Polarisierbarkeit bedeutet eine erleichterte Verschiebbarkeit elektrischer Ladungen im System, die sich in einer verbesserten Diffusions-Polarisation der Ladungen in der Kristallstruktur der Mikroteilchen äußert. Die verbesserte Diffusions-Polarisation in den Mikroteilchen führt im Verbund mit dem polymeren Bindemittel zur Ausbildung von elektrisch aktiven Zentren über die Mikropartikel selbst, die durch eine gut isolierende Bindemittelmatrix mit niedriger Dielektrizitätskonstante voneinander getrennt sind.

Dadurch, daß die Mikroteilchen sehr klein im Durchmesser sind und fein verteilt über die Bindemittelmatrix vorliegen, existieren in der Isolationsschicht sehr viele aktive Zentren mit erhöhter Polarisierbarkeit, die eine effektive Delokalisierung der örtlich sehr begrenzt auftretenden elektrischen Spannungsspitzen in der Isolationsschicht bewirken. Somit treten in der (thermisch labileren) isolierenden Bindemittelphase weniger kritische Überspannungen auf, die zu einer lokalen Schädigung und zum vorzeitigen Ausfall der Isolierung führen würden. Dieser Mechanismus wird als Ursache für die deutlich verbesserte Teilentladungsbeständigkeit sowie die überproportional erhöhte elektrische Lebensdauer der erfindungsgemäßen Zusammensetzung angesehen.

Die nachfolgenden Beispiele zeigen die Auswirkungen der gezielten Defektchemie in den Mikroteilchen auf die elektrischen Eigenschaften der Isolationswerkstoffe.

Zu diesem Zweck wurden Kupfer-Bleche mit dem Polyurethanlack ohne Füllstoff und Polyurethan mit Y₂O₃ dotiertem und undotiertem ZrO₂ beschichtet. Die Schichtdicke der Proben betrug ca. 20 µm. Die Bestimmung der dielektrischen Eigenschaften erfolgte im Wechselfeld über die Messung der Kapazität der Proben bei einer Frequenz von 50 Hz, einer Spannung von Vpp=100 Volt und einer Temperatur von T=20 °C. Darüber hinaus wurden an den Proben die mittleren Feldstärken beim ersten Auftreten von Teilentladungen unter einer bestimmten Schwellspannung ermittelt. Die resultierenden Ergebnisse sind in der nachfolgenden Tabelle dargestellt.

**Tabelle : DK-Werte und Teilentladungen von Polyurethan-basierten Isolationsschichten mit ZrO₂ Mikroteilchen mit und ohne Defektchemie im Vergleich zur ungefüllten Polyurethanmatrix**

| Polyurethanlack (PU) | Konzentration an dotiertem ZrO₂ bezüglich Gesamtkomposition | Konzentration an undotiertem ZrO₂ bezüglich Gesamtkomposition | DK-Wert | Mittlere Feldstärke bei einer ersten Teilentladung |
|---|---|---|---|---|
| PU 1 | 0 Vol.-% | 0 Vol.-% | 4,4 | 118 kV/mm |
| PU 2 | 5 Vol.-% | 0 Vol.-% | 5,6 | 130 kV/mm |
| PU 3 | 10 Vol.-% | 0 Vol.-% | 6,6 | 140 kV/mm |
| PU 4 | 0 Vol.-% | 5 Vol.-% | 3,1 | 65 kV/mm |
| PU 5 | 0 Vol.-% | 10 Vol.-% | 3,5 | 75 kV/mm |

Aufgrund der vorhandenen Defektstruktur und der dadurch erhöhten Diffusions-Polarisation der Ladungen in den dotierten Mikroteilchen wird eine hohe Dielektrizitätskonstante im Gegensatz zu entsprechend undotierten Mikroteilchen erzielt. Letztlich werden dadurch die durch Anlegen eines äußeren elektrischen Wechselfeldes entstehenden Teilentladungen in der Isolation wieder vergleichmäßigt. Somit kann das Erreichen einer kritischen Größe der Teilentladungen und die Bildung von Teilentladungspfaden (Treeing) vermieden werden.

Dies wiederum führt letztlich zu der beobachteten überproportionalen Verbesserung der elektrischen Lebensdauer der erfindungsgemäßen Zusammensetzung.

Diese Erhöhung der Teilentladungsbeständigkeit der Komposite mir ZrO₂-Mikroteilchen mit Defektstruktur wird durch erhöhte Temperatur weiter verstärkt, wie die folgenden Untersuchungen verdeutlichen.

Die mit Polyurethan ohne Füllstoff und Polyurethan mit Y₂O₃ dotiertem und undotiertem ZrO₂ beschichteten Metallbleche wurden auf 170 °C aufgeheizt. Anschließend wurden die Proben dem elektrischen Wechselfeld ausgesetzt und daran der fließende Strom (Leckstrom) gemessen, der seinerseits in umgekehrt proportionaler Relation ein Maß für die Güte der Isoliereigenschaften der jeweiligen Beschichtungen darstellt. In diesem Zusammenhang zeigten die Kompositproben mit dotiertem ZrO₂ einen niedrigeren Leckstrom im Gegensatz zu den Kompositproben mit undotierten ZrO₂-Teilchen (I_{PU}= 33 µA, I_{PU-ZrO2-undotiert}= 60 µA, I_{PU-ZrO2-dotiert} = 8,3 µA). Dies deutet darauf hin, daß die Diffusions-Polarisation der Ladungsträger in den Kompositen mit Defektstruktur durch hohe Temperatur weiter erhöht werden, wodurch die durch das elektrische Feld hervorgerufenen Teilentladungen wiederum weiter vergleichmäßigt werden können. Dies führt zum bereits gemessenen niedrigeren Leckstrom. Auch diese Ergebnisse belegen damit, daß die Mikroteilchen mit Defektstruktur zu einer Erhöhung der elektrischen Lebensdauer der Isolationsschichten führen.

### Beispiel 1: (Referenz-Isolierlack)

Als Referenz-Isolierlack wurde kommerziell erhältliches Polyurethanharz eingesetzt. PU-Harz enthält die Komponente Polyesterpolyole und blockierte Isocyanathärter. Der Feststoffgehalt beträgt ca. 25 Gew.-%.

### Beispiel 2: Herstellung des ZrO₂-Mikroteilchen-Sols aus undotierten ZrO₂-Teilchen

Undotierte ZrO₂-Mikroteilchen wurden über einen kontrollierten Wachstumsprozeß bei hohem Druck und hohen Temperaturen (Hydrothermalprozeß) hergestellt. Dazu wurde 3.200 g Zr-n-Propylat mit entsprechenden Additiven zu einer kontrollierten Fällung gebracht und in einem Autoklaven bei T= 270 °C und 80 bar für 5 h behandelt. Danach wurde der auf diese Weise hergestellte Pulverkuchen gefriergetrocknet. Das Pulver wurde anschließend in Ethanol mit Trioxadecansäure oberflächenmodifiziert. In diese Mischung wurde ca. 1 kg undotiertes ZrO₂ eindispergiert. Die ganze Suspension wurde anschließend unter kontinuierlichem Mahlen mit ZrO₂-Mahlkugeln für ca. 5 h homogenisiert. Man erhält oberflächenmodifizierte undotierte ZrO₂-Mikroteilchen.

### Beispiel 3 : (Herstellung des ZrO₂-Mikroteilchen-Sols aus dotierten ZrO₂-Mikroteilchen

Dotierte ZrO₂-Mikroteilchen wurden analog der Herstellung gemäß Beispiel 2 über Hydrothermalprozeß hergestellt. Dazu wurde 3.200 g Zr-n-Propylat vorgelegt und darin zur Dotierung 230 g Yttrium-Nitrat (Y-Nitrat) dispergiert. Dieses wurde mit entsprechenden Additiven zu einer kontrollierten Fällung gebracht und anschließend in einem Autoklaven bei T= 270 °C und 80 bar für 5 h behandelt. Der auf diese Weise erhaltene Pulverkuchen wurde gefriergetrocknet.

Das erhaltene Pulver wurde in Ethanol mit Trioxadecansäure oberflächenmodifiziert. Hierbei wurde 1.375 g Ethanol vorgelegt und dazu 125 g Trioxadecansäure zugegeben. Darin wurde ca. 1 kg dotierte ZrO₂-Teilchen dispergiert. In diese Mischung wurde ca. 1 kg dotiertes ZrO₂ eindispergiert. Die ganze Suspension wurde anschließend unter kontinuierlichem Mahlen mit ZrO₂-Mahlkugeln für ca. 5 h homogenisiert. Man erhält oberflächenmodifizierte dotierte ZrO₂-Mikroteilchen.

### Beispiel 4 : Herstellung des PU-ZrO₂-Kompositsols mit undotierten ZrO₂-Mikroteilchen

Zur Herstellung des PU-ZrO₂-Kompositsols mit undotiertem ZrO₂ als Isolierlack wurde ca. 1,7 kg PU-Matrixlack aus Beispiel 1 vorgelegt und darin unter Rühren 300 g undotiertes ZrO₂-Sol aus Beispiel 2 dispergiert. Zur besseren Dispergierung wurde dieses Sol der Ultraschalleinwirkung unterzogen. Das Gesamt-PU-Kompositsol wurde über 12 h unter Rühren weiter homogenisiert. Damit konnte ein homogenes beschichtungsfähiges PU-Kompositsol mit homogener Verteilung an undotiertem ZrO₂ erhalten werden.

### Beispiel 5 : Herstellung des PU-ZrO₂-Kompositsols mit dotierten ZrO₂-Mikroteilchen

Zur Herstellung des PU-ZrO₂-Kompositsols mit dotiertem ZrO₂ als Isolierlack wurde analog dem Beispiel 4 1,7 kg PU-Matrixlack aus Beispiel 1 vorgelegt und darin unter Rühren 300 g dotiertes ZrO₂-Sol aus Beispiel 2 dispergiert. Zur besseren Dispergierung wurde dieses Sol der Ultraschalleinwirkung unterzogen. Das Gesamt-PU-Kompositsol wurde über 12 h unter Rühren weiter homogenisiert. Es resultierte daraus ein homogenes beschichtungsfähiges PU-Kompositsol mit homogener Verteilung an dotierten ZrO₂-Mikroteilchen.

## Patentansprüche

1. Zusammensetzung zur Beschichtung elektrischer Leiter bestehend aus
➢ 1 - 50 Gew.-% Mikroteilchen mit einer gezielt eingestellten elektronischen Defektstruktur im Kristallgitter, welche eine erhöhte Polarisierbarkeit der Valenzelektronen bewirkt und
➢ einer organischen und/oder organisch-anorganischen polymeren Matrix, wobei die Matrix aus Polyurethan besteht,
wobei die Mikroteilchen mit der gezielt eingestellten elektronischen Defektstruktur aus ZrO₂ aufgebaut sind, in der Weise, daß das Grundkristallgitter durch Dotierung mit Y₂O₃ mit Leerstellen im Kristallgitter ausgestattet ist, welche über Defektchemie (Defektstruktur) eine erhöhte elektronische Polarisierbarkeit der Mikroteilchen bewirken, wobei 0,5 bis 15 mol.-% Dotierungselemente eingesetzt sind.

2. Zusammensetzung gemäß Anspruch 1, **dadurch gekennzeichnet, daß** die organische und/oder organisch-anorganische Matrix ein oder mehrere polymerisierbare und/oder hybride Bindemittel umfaßt.

3. Zusammensetzung gemäß Anspruch 1, **dadurch gekennzeichnet, daß** diese einen oder mehrere der Stoffe aus der Gruppe bestehend aus Additiven, Polymerisationsinitiatoren, Lösungsmitteln, Pigmenten und/oder Füllstoffen enthält.

4. Zusammensetzung gemäß Anspruch 1, **dadurch gekennzeichnet, daß** 1 bis 10 mol.-%, besonders bevorzugt 2 bis 8 mol.-% Dotierungselemente eingesetzt sind.

5. Zusammensetzung gemäß Anspruch 1, **dadurch gekennzeichnet, daß** der mittlere Teilchendurchmesser der Mikroteilchen mit elektronischer Defektstruktur 1 bis 1.000 nm beträgt.

6. Zusammensetzung gemäß Anspruch 2, **dadurch gekennzeichnet, daß** die Mikroteilchen den polymerbasierten und/oder hybriden Bindemittel angepaßte reaktive Oberflächen-Gruppen enthalten.

7. Zusammensetzung gemäß Anspruch 6, **dadurch gekennzeichnet, daß** die reaktiven Oberflächen-Gruppen aus der Gruppe bestehend aus Metallsäureestern, Cyanatogruppen, Urethangruppen, Epoxidgruppen, Epoxy, Carbonsäureanhydrid, C=C-Doppelbindungssystemen, Hydroxygruppen, sauerstoffgebundene Alkohole, Ester, Ether, Chelatbildner, Carboxylgruppen, Aminogruppen, Ammonium und/oder reaktiven Harzkomponenten ausgewählt sind, wobei die polymerbasierten Bindemittel Acrylat-, Phenol-, Melamin-, Polyester-Polyesterimid-, Polysulfid-, Epoxid- oder Polyamidgruppen, Polyvinylformalharze, Aromate, Aliphate, Ester, Ether, Alkoholate, Fette oder Chelatbildner enthalten.

8. Zusammensetzung gemäß Anspruch 1, **dadurch gekennzeichnet, daß** die Zusammensetzung transparent ist.

9. Zusammensetzung gemäß Anspruch 1, **dadurch gekennzeichnet, daß** diese eine Fluorverbindung enthält.

10. Zusammensetzung gemäß Anspruch 1, **dadurch gekennzeichnet, daß** diese organisch modifizierte anorganische Kondensate enthält.

11. Zusammensetzung gemäß Anspruch 10, **dadurch gekennzeichnet, daß** diese ein fluoriertes Silan, dessen Vorkondensat oder Kondensat enthält.

12. Verfahren zum Herstellen einer Beschichtung für elektrische Leiter, **dadurch gekennzeichnet, daß**
➢ 1 - 50 Gew.-% Mikroteilchen mit einer gezielt eingestellten elektronischen Defektstruktur im Kristallgitter, welche eine erhöhte Polarisierbarkeit der Valenzelektronen und
➢ eine organische und/oder organisch-anorganische polymere Matrix, wobei die Matrix aus Polyurethan besteht,
dispergiert werden, wobei die Mikroteilchen mit der gezielt eingestellten elektronischen Defektstruktur aus ZrO₂ aufgebaut sind, in der Weise, daß das Grundkristallgitter durch Dotierung mit Y₂O₃ mit Leerstellen im Kristallgitter ausgestattet wird, welche über Defektchemie (Defektstruktur) eine erhöhte elektronische Polarisierbarkeit der Mikroteilchen bewirken, wobei 0,5 bis 15 mol.-% Dotierungselemente eingesetzt werden.

13. Verfahren gemäß Anspruch 12, **dadurch gekennzeichnet, daß** die organische und/oder organisch-anorganische Matrix ein oder mehrere polymerisierbare und/oder hybride Bindemittel umfaßt.

14. Verfahren gemäß Anspruch 12, **dadurch gekennzeichnet, daß** einer oder mehrere der Stoffe aus der Gruppe bestehend aus Additiven, Lösungsmitteln, Pigmenten und/oder Füllstoffen zugegeben werden.

15. Verfahren gemäß Anspruch 12, **dadurch gekennzeichnet, daß** 1 bis 10 mol.-%, besonders bevorzugt 2 bis 8 mol.-% Dotierungselemente eingesetzt werden.

16. Verfahren gemäß Anspruch 12, **dadurch gekennzeichnet, daß** der mittlere Teilchendurchmesser der Mikroteilchen mit elektronischer Defektstruktur 1 bis 1.000 nm beträgt.

17. Verfahren gemäß Anspruch 12, **dadurch gekennzeichnet, daß** die Einstellung der elektronischen Defektstruktur der Mikroteilchen durch Ionenstrahl- und/oder Elektronenstrahl-Behandlung erfolgt.

18. Verfahren gemäß Anspruch 12, **dadurch gekennzeichnet, daß** die Mikroteilchen den polymerbasierten und/oder hybriden Bindemittel angepaßte reaktive Oberflächen-Gruppen enthalten.

19. Verfahren gemäß Anspruch 12, **dadurch gekennzeichnet, daß** die reaktiven Oberflächen-Gruppen aus der Gruppe bestehend aus Metallsäureestern, Cyanatogruppen, Urethangruppen, Epoxidgruppen, Epoxy, Carbonsäureanhydrid, C=C-Doppelbindungssystemen, Hydroxygruppen, sauerstoffgebundene Alkohole, Ester, Ether, Chelatbildner, Carboxylgruppen, Aminogruppen, Ammonium und/oder reaktiven Harzkomponenten ausgewählt sind, wobei die polymerbasierten Bindemittel Acrylat-, Phenol-, Melamin-, Polyester-Polyesterimid-, Polysulfid-, Epoxid- oder Polyamidgruppen, Polyvinylformalharze, Aromate, Aliphate, Ester, Ether, Alkoholate, Fette oder Chelatbildner enthalten.

## Claims

1. Coating composition for electrical conductors, consisting of
➢ 1 - 50 wt. % of microparticles with a selectively adjusted electronic defect structure in the crystal lattice, said defect structure making the valence electrons more easily polarizable, and
➢ an organic and/or organic-inorganic polymeric matrix, said matrix consisting of polyurethane,
the microparticles with the selectively adjusted electronic defect structure being made up of ZrO₂ in such manner that by means of doping with Y₂O₃ the basic crystal lattice is provided with vacancies which, by way of defect chemistry (defect structure) make it easier for the microparticles to be electronically polarized, the amount of doping elements used being 0.5 to 15 mol %.

2. Composition according to claim 1, **characterized in that** the organic and/or organic-inorganic matrix includes one or more polymerizable and/or hybrid binders.

3. Composition according to claim 1, **characterized in that** said composition contains one or more of the substances from the group consisting of additives, polymerization initiators, solvents, pigments and/or fillers.

4. Composition according to claim 1, **characterized in that** the amount of doping elements used is 1 to 10 mol. %, even more preferably 2 to 8 mol. %.

5. Composition according to claim 1, **characterized in that** the average particle diameter of the microparticles with an electronic defect structure is 1 - 1,000 nm.

6. Composition according to claim 2, **characterized in that** the microparticles contain reactive surface groups adapted to the polymer-based and/or hybrid binders.

7. Composition according to claim 6, **characterized in that** the reactive surface groups are selected from the group comprising metal acid esters, cyanate groups, urethane groups, epoxide groups, epoxy, carboxylic acid anhydride, C=C double bond systems, hydroxyl groups, alcohols bound by way of oxygen, esters, ethers, chelating agents, carboxyl groups, amino groups, ammonium and/or reactive resin components, the polymer-based binders containing acrylate groups, phenol groups, melamine groups, polyester-polyester imide groups, polysulfide groups, epoxide or polyamide groups, polyvinyl formal resins, aromatic compounds, aliphatic compounds, esters, ethers, alcoholates, fats or chelating agents.

8. Composition according to claim 1, **characterized in that** said composition is transparent.

9. Composition according to claim 1, **characterized in that** said composition contains a fluorine compound.

10. Composition according to claim 1, **characterized in that** said composition contains organically modified inorganic condensates.

11. Composition according to claim 10, **characterized in that** said composition contains a fluorinated silane, its pre-condensate or condensate.

12. Method of producing a coating for electrical conductors, **characterized in that**
➢ 1 - 50 wt. % of microparticles with a selectively adjusted electronic defect structure in the crystal lattice, said defect structure making the valence electrons more easily polarizable, and
➢ an organic and/or organic-inorganic polymeric matrix, said matrix consisting of polyurethane,
are dispersed, the microparticles with the selectively adjusted electronic defect structure being made up of ZrO₂ in such manner that by means of doping with Y₂O₃ the basic crystal lattice is provided with vacancies which, by way of defect chemistry (defect structure) make it easier for the microparticles to be electronically polarized, the amount of doping elements used being 0.5 to 15 mol %.

13. Method according to claim 12, **characterized in that** the organic and/or organic-inorganic matrix includes one or more polymerizable and/or hybrid binders.

14. Method according to claim 12, **characterized in that** one or more of the substances from the group consisting of additives, solvents, pigments and/or fillers are added.

15. Method according to claim 12, **characterized in that** the amount of doping elements used is 1 to 10 mol. %, even more preferably 2 to 8 mol. %.

16. Method according to claim 12, **characterized in that** the average particle diameter of the microparticles with an electronic defect structure is 1 - 1,000 nm.

17. Method according to claim 12, **characterized in that** the electronic defect structure of the microparticles is adjusted by means of ion-beam and/or electron-beam treatment.

18. Method according to claim 12, **characterized in that** the microparticles contain reactive surface groups adapted to the polymer-based and/or hybrid binders.

19. Method according to claim 12, **characterized in that** the reactive surface groups are selected from the group comprising metal acid esters, cyanate groups, urethane groups, epoxide groups, epoxy, carboxylic acid anhydride, C=C double bond systems, hydroxyl groups, alcohols bound by way of oxygen, esters, ethers, chelating agents, carboxyl groups, amino groups, ammonium and/or reactive resin components, the polymer-based binders containing acrylate groups, phenol groups, melamine groups, polyester-polyester imide groups, polysulfide groups, epoxide or polyamide groups, polyvinyl formal resins, aromatic compounds, aliphatic compounds, esters, ethers, alcoholates, fats or chelating agents.

## Revendications

1. Composition pour le revêtement de conducteurs électriques, constitué de
- 1-50 % en poids de microparticules présentant une structure électronique défectueuse ajustée de façon ciblée dans le réseau cristallin, laquelle structure a pour effet une plus grande polarisabilité des électrons de valence, et
- une matrice polymère organique et/ou organique/minérale, la matrice étant composée de polyuréthane,
les microparticules présentant une structure électronique défectueuse ajustée de façon ciblée étant composées de ZrO₂ de telle sorte que le réseau cristallin de base est muni de lacunes réticulaires dans le réseau cristallin par dopage avec du Y₂O₃ qui a pour effet une plus grande polarisabilité électronique des microparticules par chimie des défauts (structure défectueuse), 0,5 à 15 % en mol d'élément de dopage étant utilisés.

2. Composition selon la revendication 1, **caractérisée en ce que** la matrice organique et/ou organique/minérale comprend un ou plusieurs liants polymérisables et/ou hybrides.

3. Composition selon la revendication 1, **caractérisée en ce qu'**elle contient une ou plusieurs substances choisies dans le groupe composé des additifs, des initiateurs de polymérisation, des solvants, des pigments et/ou des charges.

4. Composition selon la revendication 1, **caractérisée en ce que** 1 à 10 % en mol d'éléments dopants sont utilisés, de préférence de 2 à 8 % en mol.

5. Composition selon la revendication 1, **caractérisée en ce que** le diamètre de particule moyen des microparticules présentant une structure défectueuse électronique est compris entre 1 et 1 000 nm.

6. Composition selon la revendication 2, **caractérisée en ce que** les microparticules contiennent des groupes réactifs de surface adaptés aux liants polymérisables et/ou hybrides.

7. Composition selon la revendication 6, **caractérisée en ce que** les groupes réactifs de surface sont choisis dans le groupe composé d'esters d'acides métalliques, de groupes cyanates, de groupes uréthane, de groupes époxyde, d'époxys, d'anhydrides d'acides carboxyliques, de systèmes à double liaison C=C-, de groupes hydroxyles, d'alcools liés par de l'oxygène, d'esters, d'éthers, de chélateurs, de groupes carboxyles, de groupes amino, d'ammonium et/ou de composants de résines réactives, les liants polymérisables contenant des groupes acrylates, phénoliques, mélamines, polyester-polyesterimides, polysulfures, époxydes ou polyamides, des résines formal polyvinyliques, des composés aromatiques, des composés aliphatiques, des esters, des éthers, des alcoolates, des graisses ou des chélateurs.

8. Composition selon la revendication 1, **caractérisée en ce que** la composition est transparente.

9. Composition selon la revendication 1, **caractérisée en ce que** celle-ci contient un composé du fluor.

10. Composition selon la revendication 1, **caractérisée en ce que** celle-ci contient des produits de condensation minéraux modifiés organiquement.

11. Composition selon la revendication 10, **caractérisée en ce que** celle-ci contient un silane fluoré, son pré-condensat ou son condensat

12. Procédé de fabrication d'un revêtement pour conducteurs électriques, **caractérisé en ce que**
- 1-50 % en poids de microparticules présentant une structure électronique défectueuse ajustée de façon ciblée dans le réseau cristallin, laquelle structure a pour effet une plus grande polarisabilité des électrons de valence, et
- une matrice polymère organique et/ou organique/minérale, la matrice étant composée de polyuréthane,
sont dispersés, les microparticules présentant une structure électronique défectueuse ajustée de façon ciblée étant composées de ZrO₂ de telle sorte que le réseau cristallin de base est muni de lacunes réticulaires dans le réseau cristallin par dopage avec du Y₂0₃ qui a pour effet une plus grande polarisabilité électronique des microparticules par chimie des défauts (structure défectueuse), 0,5 à 15 % en mol d'élément de dopage étant utilisés.

13. Procédé selon la revendication 12, **caractérisé en ce que** la matrice organique et/ou organique/minérale comprend un ou plusieurs liants polymérisables et/ou hybrides.

14. Procédé selon la revendication 12, **caractérisé en ce qu'**une ou plusieurs des substances choisies dans le groupe composé des additifs, des solvants, des pigments et/ou des charges sont ajoutées.

15. Procédé selon la revendication 12, **caractérisé en ce que** 1 à 10 % en mol d'éléments dopants sont utilisés, de préférence de 2 à 8 % en mol.

16. Procédé selon la revendication 12, **caractérisé en ce que** le diamètre de particule moyen des microparticules présentant une structure défectueuse électronique est compris entre 1 et 1 000 nm.

17. Procédé selon la revendication 12, **caractérisé en ce que** l'ajustage de la structure électronique défectueuse est réalisé par traitement par faisceau d'ions et/ou par faisceau d'électrons,

18. Procédé selon la revendication 12, **caractérisé en ce que** les microparticules contiennent des groupes réactifs de surface adaptés aux liants polymérisables et/ou hybrides.

19. Procédé selon la revendication 12, **caractérisé en ce que** les groupes réactifs de surface sont choisis dans le groupe composé d'esters d'acides métalliques, de groupes cyanates, de groupes uréthane, de groupes époxyde, d'époxys, d'anhydrides d'acides carboxyliques, de systèmes à double liaison C=C-, de groupes hydroxyles, d'alcools liés par de l'oxygène, d'esters, d'éthers, de chélateurs, de groupes carboxyles, de groupes amino, d'ammonium et/ou de composants de résines réactives, les liants polymérisables contenant des groupes acrylates, phénoliques, mélamines, polyester-polyesterimides, polysulfures, époxydes ou polyamides, des résines formai polyvinyliques, des composés aromatiques, des composés aliphatiques, des esters, des éthers, des alcoolates, des graisses ou des chélateurs.
